# EUROPÄISCHE PATENTANMELDUNG

(11) **EP 1 256 558 A2**
(43) Veröffentlichungstag der Anmeldung: **13.11.2002**
(21) Anmeldenummer: 02010374.3
(22) Anmeldetag: 08.05.2002
(51) Int. Cl.: C06B 21/00

(54) **Verfahren zur Herstellung von Kristallen aus in einem Lösungsmittel gelösten Treib-, Explosivstoffen und Oxidatoren**

(30) Priorität: 11.05.2001 DE 10123073
(71) Anmelder: Fraunhofer-Gesellschaft zur Förderung der angewandten Forschung e.V., 80636 München (DE)
(72) Erfinder: Mikonsaari, Irma, 76327 Pfinztal (DE); Teipel, Ulrich,Dr., 76327 Pfinztal (DE); Ulrich,Joachim, Prof.Dr., 06120 Halle (DE)
(74) Vertreter: Lichti, Heiner, Dipl.-Ing.

(57) **Zusammenfassung**

Es wird ein Verfahren zur Herstellung von Kristallen aus einem in einem Lösungsmittel gelösten Treib-, Explosivstoff oder Oxidator vorgeschlagen, indem die Lösung je nachdem, ob der Treib-, Explosivstoff oder Oxidator eine positive oder eine negative Löslichkeit aufweist, unter Bildung des Feststoffkristallisates bis unterhalb ihrer Sättigungstemperatur abgekühlt bzw. bis oberhalb ihrer Sättigungstemperatur erhitzt wird. Um eine engere und reproduzierbare Partikelgrößenverteilung der erzeugten Kristalle unter Vermeidung eines Einsatzes von Impfkeimen zu erhalten, wird zum Initiieren der Kristallbildung im metastabilen Bereich unterhalb bzw. oberhalb der Sättigungstemperatur Ultraschallenergie in die Lösung eingekoppelt, was z. B. innerhalb eines Temperaturintervalls zwischen der Sättigungstemperatur der Lösung und einer um etwa 20°C niedrigeren bzw. höheren Temperatur als die Sättigungstemperatur während des Abkühlens bzw. Erhitzens geschehen kann. Die Partikelgröße des Kristallisates kann insbesondere durch die Dauer der Einkopplung der Ultraschallenergie oder durch die Temperatur der Lösung bei Einkopplung der Ultraschallenergie gesteuert werden.

## Beschreibung

Die Erfindung betrifft ein Verfahren zur Herstellung von Kristallen aus wenigstens einem in einem Lösungsmittel gelösten Treib-, Explosivstoff und/oder Oxidator mit positiver bzw. negativer Löslichkeit, indem die Lösung unter Bildung des Feststoffkristallisates bis unterhalb ihrer Sättigungstemperatur abgekühlt bzw. bis oberhalb ihrer Sättigungstemperatur erhitzt wird.

Die Kristallisation ist ein bekanntes thermisches Gewinnungs- oder Trennverfahren, wobei eine Komponente eines aus wenigstens zwei Komponenten bestehenden homogenen Systems, beispielsweise einer Lösung, einer Schmelze oder eines Gasgemisches, unter Bildung einer festen Phase abgetrennt wird. Bei der Kristallisation eines oder mehrerer Feststoffe aus einer Lösung mit molekulardisperser Verteilung der Feststoffe in einem Lösungsmittel wird die Lösung in der Regel durch Kühlen (Kühlungskristallisation), Verdampfen des Lösungsmittels (Verdampfungskristallisation) oder Kombination beider Varianten übersättigt, wobei durch Abbau dieser Übersättigung der Feststoff als Kristallisat anfällt, das mechanisch von der Restlösung abtrennbar ist. Die Übersättigung kann durch Unterdruck (Vakuumkristallisation), Aussalzen, Ausfällen, gegebenenfalls durch Zugabe von Impfkeimen, oder Zuführung von Rührenergie (Agitation) zusätzlich unterstützt werden. Insbesondere die Kristallisation aus Lösungen findet vielfältig Verwendung zur Reinigung oder Trennung von Stoffgemischen, zur Aufkonzentrierung von Lösungen oder zur Herstellung von Partikeln hoher Reinheit oder bestimmter Partikelform oder zur Verringerung von Kristallfehlstellen bzw. zur Modifikation der kristallinen Phase.

Bei der Herstellung thermisch empfindlicher kristalliner Feststoffe, wie Treib-, Explosivstoffe und Oxidatoren, kommt vornehmlich die Kühlungs- oder Heizkristallisation zum Einsatz, um die thermische Beeinträchtigung des Kristallisates gegenüber der Verdampfungskristallisation möglichst gering zu halten und insbesondere eine Deflagration (Verpuffung) oder gar Detonation des zu kristallisierenden Feststoffes zu vermeiden. Während die Kühlungskristallisation zur Herstellung von Kristallen aus Feststoffen mit positiver Löslichkeit eingesetzt werden kann, ist die Heizkristallisation zur Herstellung von Kristallen mit negativer Löslichkeit geeignet. Die meisten Feststoffe weisen eine positive Löslichkeit auf, was bedeutet, daß das Löslichkeitsprodukt einer bei einer bestimmten Temperatur gesättigten Lösung durch Absenken dieser Temperatur unter Bildung des Feststoffkristallisates überschritten wird. Ferner sind aus gelöstem Feststoff und Lösungsmittel bestehende Stoffsysteme mit negativer Löslichkeit bekannt, bei denen das Löslichkeitsprodukt einer bei einer bestimmten Temperatur gesättigten Lösung durch Erhöhen dieser Temperatur unter Bildung des Feststoff-kristallisates überschritten wird.

Diese Kristallisationsverfahren eignen sich grundsätzlich für alle diejenigen aus Lösungsmittel und gelöstem Feststoff bestehenden Systeme, welche eine verhältnismäßig starke Abhängigkeit der Löslichkeit des Feststoffes von der Temperatur des jeweiligen Lösungsmittels aufweisen. Die Qualität der Kristalle hinsichtlich Partikelgrößenverteilung, Reproduzierbarkeit, Kristalldefekte, wie Fehlstellen etc., ist hierbei stark von der Initiierung der Kristallbildung abhängig, wobei die Lösung entweder agitiert oder mit Impfkeimen versetzt werden kann. Die Kristallbildung wird bei Feststoffen mit positiver Löslichkeit im metastabilen Bereich der Lösung unterhalb ihrer Sättigungstemperatur, im Falle von Feststoffen mit negativer Löslichkeit im metastabilen Bereich der Lösung oberhalb ihrer Sättigungstemperatur ausgelöst.

Es hat sich gezeigt, daß je nach Qualität und Art der Lösung die Kristallbildung auch bei konstanter Abkühlrate bzw. Heizrate stets zu einem unterschiedlichen Zeitpunkt bzw. bei einer unterschiedlichen Unterkühlung bzw. Überhitzung einsetzt. Dieser Effekt wird durch äußere Einflüsse, z. B. Erschütterungen der Lösung, noch verstärkt. Hieraus resultiert eine mangelhafte Reproduzierbarkeit, eine breite Kornverteilung der erzeugten Kristalle und somit eine unterschiedliche Kristallqualität. Eine zufriedenstellende Reproduzierbarkeit liefert einzig der Einsatz von Impfkeimen bei einer fest vorgegebenen Übersättigungstemperatur. Nachteilig ist jedoch, daß auf diese Weise einerseits die Herstellung sehr feiner Partikel nicht möglich ist, andererseits ist insbesondere bei Treib-, Explosivstoffen und Oxidatoren häufig eine größtmögliche Reinheit der Kristalle erwünscht, so daß der Einsatz von Impfkeimen ausscheidet und gleichmäßig treibende Potentiale zur Keimbildung erforderlich sind. Dies gilt insbesondere für Treibsätze von Rückstoßflugkörpern, wie Weltraumflugkörpern (Raketen), strategischen Waffen etc., bei denen ein kontrollierter und steuerbarer Abbrand des Treibsatzes erforderlich ist. Ferner sind der Partikelgröße nach unten hin Grenzen gesetzt und enge Partikelgrößenverteilungen nicht erzielbar.

Der Erfindung liegt die Aufgabe zugrunde, ein Verfahren der eingangs genannten Art dahingehend weiterzubilden, daß es unter Vermeidung des Einsatzes von Impfkeimen die kostengünstige Herstellung von Kristallen aus Treib-, Explosivstoffen und/oder Oxidatoren hoher Reinheit mit definierten Eigenschaften, wie mittlerer Partikelgröße, enger Partikelgrößenverteilung und insbesondere hoher Reproduzierbarkeit, ermöglicht.

Erfindungsgemäß wird diese Aufgabe bei einem Verfahren der eingangs genannten Art zur Herstellung von Kristallen aus wenigstens einem in einem Lösungsmittel gelösten Treib-, Explosivstoff und/oder Oxidator mit positiver Löslichkeit dadurch gelöst, daß zum Initiieren der Kristallbildung unterhalb der Sättigungstemperatur Ultraschallenergie in die Lösung eingekoppelt wird. Bei einem Verfahren zur Herstellung von Kristallen aus wenigstens einem in einem Lösungsmittel gelösten Treib-, Explosivstoffen und/oder Oxidatoren mit negativer Löslichkeit der eingangs genannten Art ist zur Lösung der Erfindungsaufgabe vorgesehen, daß zum Initiieren der Kristallbildung oberhalb der Sättigungstemperatur Ultraschallenergie in die Lösung eingekoppelt wird.

Der Einsatz von Ultraschall zur Initiierung der Kristallbildung aus Lösungen ist an sich bekannt. So beschreibt die EP 0 797 562 B1 ein Verfahren zur Herstellung von Adipinsäurekristallen, wobei die Kristallisation durch Eintrag von Ultraschall in eine Adipinsäurelösung unter Kühlen derselben erfolgt. Eine Exposition von Treib-, Explosivstoffen oder Oxidatoren in fester oder gelöster Form mit Ultraschall wurde von der Fachwelt bislang insbesondere aus sicherheitstechnischen Gründen jedoch für ausgeschlossen erachtet, da man annahm, daß derartige Feststoffe aufgrund der in Ultraschallfeldern auftretenden Kavitation zur unkontrollierten Deflagration oder gar Detonation neigen. So ist es bekannt, daß bei der Einkopplung von Ultraschall in Flüssigkeiten lokal Gasbläschen gebildet werden, die nach kurzer Lebensdauer im Millisekundenbereich kollabieren und lokal überhitzte Bereiche, sogenannte Hot Spots, erzeugen. Die Temperaturen und Drucke in diesen Hot Spots sind erheblich und betragen bis zu etwa 4300°C und etwa 20 GPa. Zusätzlich entstehen entstehen beim Kollabieren der Gasbläschen lokal extreme Strömungsgeschwindigkeiten der Flüssigkeit im Bereich von 100 m/s (N.A. Tsochatzidis, P. Guiraud, A.M. Wilhelm, H. Delmas: Determination of velocity, size and concentration of ultrasonic cavitation bubbles by the phase-Doppler technique, Chemical Engineering Science 56, 2001, Seite 1831 bis 1840; A. Mutsuo, T.A. Ring, J.S. Haggerty: Analysis and Modeling of the Ultrasonic Disperse Technique, Advanced Ceramic Materials 2 [3A], 1987, Seite 209 bis 212).

Überraschenderweise wurde nun gefunden, daß die Kristallbildung von Treib-, Explosivstoffen und Oxidatoren durch die Einkopplung von Ultraschallenergie in eine Lösung solcher energetischer Materialien - bei kristallinen Stoffen mit positiver Löslichkeit z. B. schon knapp unterhalb bzw. bei Stoffen mit negativer Löslichkeit z. B. schon knapp oberhalb der Sättigungstemperatur - im Gegensatz zu herkömmlicher Agitation mittels Rührern gezielt initiiert werden kann und die Kristalle spontan ausfallen, ohne daß es selbst bei empfindlichen Treib-, Explosivstoffen oder Oxidatoren zur Deflagration und/oder Detonation infolge der lokal erheblichen Druck- und Temperaturbelastung des Kristallisates im Ultraschallfeld kommt. Es können somit unter Vermeidung des Einsatzes von Impfkeimen hochreine und weitestgehend fehlstellenfreie Kristalle mit einer engen Partikelgrößenverteilung reproduzierbar hergestellt werden. Durch die Einkopplung der Ultraschallenergie ist weiterhin eine spontane Kristallbildung bereits im Bereich oder unmittelbar unterhalb bzw. unmittelbar oberhalb der Sättigungstemperatur der Lösung, also bei nur geringfügiger Übersättigung im metastabilen Bereich möglich, wobei selbst in diesem Fall eine im wesentlichen schlagartige Kristallbildung bewirkt wird, so daß sich die Kristalle kontrolliert und gleichmäßig zu der gewünschten Größe ausbilden. Nach Beendigung des Kristallwachstums werden die Kristalle auf herkömmliche Weise mechanisch, z. B. mittels Filter, von dem Lösungsmittel getrennt.

Das erfindungsgemäße Verfahren ist zur Herstellung feiner Kristalle aus praktisch beliebigen, bei Raumtemperatur kristallinen Treib-, Explosivstoffen und/oder Oxidatoren geeignet, z.B. 2,4,6-Trinitrotoluol (TNT), 1,3,5-Triamino-2,4,6-trinitrobenzol (TATNB), 3-Nitro-1,2,4-triazol-5-on (NTO), Hexanitrostilben (HNS), Cyclotrimethylentrinitramin (Hexogen, RDX), Cyclotetramethylentetranitramin (Oktogen, HMX), Ammoniumdinitramid (ADN), 2,4,6,8,10,12-Hexanitro-2,4,6,8,10,12-hexaazaisowurtzitan (HNIW, auch als CL 20 bezeichnet), Pentaerythritoltetranitrat (Nitropenta, PETN), Hexanitrodiphenylamin (Hexyl), Tetranitromethylanilin (Tetryl), Nitroguanidin (NQ), Triaminoguanidinnitrat (TAGN), Ammoniumnitrat (AN) etc., wobei feine und regelmäßige Kristalle mit definierter Partikelgröße, enger Partikelgrößenverteilung und hoher Schüttdichte reproduzierbar erhalten werden können.0

Die exakte Temperatur, bei der die Kristallbildung durch eine spontane milchige Trübung optisch problemlos erkennbar ist, hängt von dem gelösten Stoff ab. Sie liegt für eine Vielzahl von Stoffen innerhalb eines Temperaturintervalls zwischen der Sättigungstemperatur der Lösung und einer um 20°C niedrigeren bzw. höheren Temperatur, beispielsweise bei 5 bis 15°C unterhalb bzw. oberhalb der Sättigungstemperatur. Gleichwohl kann die zur Einkopplung der Ultraschallenergie zur schlagartigen Kristallbildung geeignete Temperatur bei gewissen Stoffsystemen auch weit außerhalb des genannten Temperaturintervalls liegen und hängt zudem von der gewünschten Kornform und -größe der erzeugten Kristalle ab.

Aufgrund des zur Einkopplung von Ultraschallenergie geeigneten verhältnismäßig großen Temperaturintervalls zwischen der Sättigungstemperatur der Lösung und etwa 20°C unterhalb bzw. oberhalb derselben kann das erfindungsgemäße Verfahren auch zur Herstellung von Kompositpartikeln mit einer im gewählten Lösungsmittel ähnlichen Sättigungstemperatur eingesetzt werden, wobei hier z. B. Kompositpartikel aus zwei oder mehreren Isomeren organischer Treib-, Explosivstoffe und Oxidatoren von Interesse sein können. Zweckmäßig werden möglichst reine Lösungsmittel eingesetzt, um die spontane Initiierung der Kristallbildung im metastabilen Bereich der Lösung nicht zu beeinträchtigen, also einerseits eine Kristallbildung vor Einkopplung der Ultraschallenergie, andererseits die Bildung weiterer Keime nach Einkopplung der Ultraschallenergie zu verhindern.

Um für eine größtmögliche Reproduzierbarkeit zu sorgen und insbesondere während der Unterkühlung bzw. Überhitzung der Lösung im metastabilen Bereich jegliche äußere Einwirkungen zu verhindern, wird die Ultraschallenergie vorzugsweise in die ruhende Lösung eingekoppelt. Alternativ kann die Ultraschallenergie auch in eine bevorzugt gleichmäßige Strömung, wie eine Rohrströmung, eingekoppelt werden, wobei aus vorgenannten Gründen insbesondere die Einkopplung der Ultraschallenergie in eine Laminarströmung von Vorteil ist.

Die Einkopplung der Ultraschallenergie kann z. B. auf direktem Wege mittels Sonotroden oder auch mittels beliebiger bekannter Einrichtungen, wie Ultraschallbädern oder dergleichen, geschehen.

Je nach dem aus Lösungsmittel und gelöstem Treib-, Explosivstoff und/oder Oxidator bestehenden System wird bevorzugt Ultraschallenergie mit einer Frequenz zwischen etwa 10 kHz und 50 kHz und mit einer Leistung zwischen etwa 10 W und 100 W eingesetzt.

Mittels des erfindungsgemäßen Verfahrens ist es auch insbesondere möglich, die Partikelgröße des Feststoffkristallisates durch die Dauer der Einkopplung der Ultraschallenergie und/oder durch die Temperatur der Lösung bei der Einkopplung der Ultraschallenergie zu steuern. Sind beispielsweise feinpartikuläre Kristalle erwünscht, so wird die Ultraschallenergie bei verhältnismäßig hoher Übersättigung, d.h. bei einer bezüglich der Sättigungstemperatur verhältnismäßig tiefen bzw. hohen Temperatur über einen relativ langen Zeitraum und/oder mit relativ hoher Energie eingekoppelt, so daß spontan eine Vielzahl von Keimen erzeugt wird. Sind hingegen größere Kristalle von Interesse, so wird die Ultraschallenergie bereits im Bereich der Sättigungstemperatur der Lösung bzw. geringfügig unterhalb bzw. oberhalb derselben über einen relativ kurzen Zeitraum und/oder mit relativ geringer Energie eingekoppelt, so daß weniger Keime gebildet werden und ein größerer Anteil des Feststoffs in Lösung verbleibt, der während des Kristallwachstums infolge weiterer Abkühlung bzw. Beheizung der Lösung auskristallisiert und an den Kristallkeimen abgeschieden wird. Gleichzeitig wird durch Einkopplung der Ultraschallenergie bereits bei geringer Übersättigung der Lösung in einem metastabilen Bereich, in dem eine Einkopplung rein mechanischer Agitation noch gar keine Kristallbildung verursacht, ein langsameres Kristallwachstum und somit die Bildung regelmäßiger Kristalle erreicht, als es mittels der herkömmlichen Kühlungskristallisation möglich ist.

Die Lösung kann während der Einkopplung der Ultraschallenergie mit einer im wesentlichen konstanten Kühl- bzw. Heizrate oder mit einer bezüglich der Kühl- bzw. Heizrate bis zur Einkopplung der Ultraschallenergie verminderten Kühl- bzw. Heizrate abgekühlt bzw. erhitzt werden. Ebenfalls ist es möglich, daß die Temperatur der Lösung während der Einkopplung der Ultraschallenergie im wesentlichen konstant gehalten wird. Grundsätzlich richtet sich die Kühl- bzw. Heizrate vornehmlich nach der gewünschten Partikelgröße der Kristalle, wobei eine verminderte Kühl- bzw. Heizrate oder auch ein Halten der Temperatur während der Einkopplung der Ultraschallenergie insbesondere dann vorteilhaft ist, wenn der durch Einkoppeln der Ultraschallenergie maximal mögliche Feststoffanteil auskristallisiert bzw. die Lösung durch Auskristallisieren dieses Feststoffanteils von dem metastabilen in den gesättigten Bereich überführt werden soll. Auf diese Weise kann der bei der jeweiligen Temperatur in Lösung verbleibende Feststoffanteil, der bei weiterer Abkühlung bzw. Beheizung der Lösung zum Kristallwachstum der mittels Ultraschall erzeugten Keime dient, bzw. das Verhältnis des zur Keimbildung bzw. zum Kristallwachstum vorgesehenen Feststoffanteils exakt eingestellt werden. Grundsätzlich sei an dieser Stelle nochmals erwähnt, daß die Kühlungskristallisation für Stoffsysteme mit positiver Löslichkeit und die Heizkristallisation für Systeme mit negativer Löslichkeit zum Einsatz kommt.

Selbstverständlich kann das Kristallwachstum nach Einkopplung der Ultraschallenergie in an sich bekannter Weise durch die Kühlrate bzw. Heizrate gesteuert werden, wobei in der Regel um so regelmäßigere Kristalle erzeugt werden, je geringer die Kühlrate bzw. Heizrate gewählt wird bzw. je langsamer das Kristallwachstum erfolgt.

Nachstehend ist das erfindungsgemäße Verfahren anhand eines Ausführungsbeispiels näher erläutert:

### Ausführungsbeispiel

Zur Herstellung von Kristallen aus 3-Nitro-1,2,4-triazol-5-on (NTO) werden 14,5 g NTO in 500 ml Wasser bei 40°C gelöst, was bei 40°C einer gesättigten wäßrigen Lösung entspricht. Sodann wird die ruhende Lösung mit einer Kühlrate von 0,3°C/min auf 20°C abgekühlt. Bei einer Temperatur von 35°C (Unterkühlung: 5°C) wird über 8 min Ultraschallenergie mit einer Frequenz von 20 kHz und einer Leistung von 60 W in die Lösung eingekoppelt. Während bei einer Temperatur von 33,3°C eine erste Keimbildung unter schwacher Eintrübung der Lösung auftritt, ist infolge weiterer Abkühlung der Lösung auf 31,3°C eine schlagartige Keimbildung unter starker Eintrübung der Lösung erkennbar. Nach weiterer konstanter Abkühlung auf 20°C werden die erzeugten Kristalle mittels eines Filters abgetrennt und getrocknet.

Die auf diese Weise hergestellten Kristalle weisen einen mittleren Partikeldurchmesser von 254 µm und eine enge Partikelgrößenverteilung sowie eine gleichmäßige Kristallmorphologie auf. Bei zweimaliger Wiederholung des Experiments ergibt sich ein mittlerer Partikeldurchmesser von 261 µm bzw. 278 µm. Dies entspricht bei einem Mittelwert von 264,3 µm einer relativen Standardabweichung von 38,4 %.

Anschließend wird das Experiment ohne Einsatz von Ultraschallenergie, aber unter ansonsten identischen Bedingungen durchgeführt, wobei eine sichtbare Keimbildung bei 30°C einsetzt und bei 28°C eine nochmalige stärkere Eintrübung der Lösung erkennbar ist. Aufgrund der geringeren Anzahl von Keimen beträgt die mittlere Partikelgröße 345 µm bei einer sehr weiten Partikelgrößenverteilung bis >1000 µm. Die Kornform ist unregelmäßig und umfaßt sowohl sphärische als auch flockenartige bis stäbchenförmige Partikel. Bei zweimaliger Wiederholung des Experiments ergibt sich ein mittlerer Partikeldurchmesser von 209 µm bzw. 423 µm, was bei einem Mittelwert von 325,7 µm einer relativen Standardabweichung von 2400% entspricht. Die Reproduzierbarkeit ist folglich etwa um den Faktor 100 schlechter als bei dem erfindungsgemäßen Verfahren.

## Patentansprüche

1. Verfahren zur Herstellung von Kristallen aus wenigstens einem in einem Lösungsmittel gelösten Treib-, Explosivstoff und/oder Oxidator mit positiver Löslichkeit, indem die Lösung unter Bildung des Feststoffkristallisates bis unterhalb ihrer Sättigungstemperatur abgekühlt wird, **dadurch gekennzeichnet, daß** zum Initiieren der Kristallbildung unterhalb der Sättigungstemperatur Ultraschallenergie in die Lösung eingekoppelt wird.

2. Verfahren nach Anspruch 1, **dadurch gekennzeichnet, daß** die Ultraschallenergie innerhalb eines Temperaturintervalls zwischen der Sättigungstemperatur und einer um 20°C niedrigeren Temperatur in die Lösung eingekoppelt wird.

3. Verfahren zur Herstellung von Kristallen aus wenigstens einem in einem Lösungsmittel gelösten Treib-, Explosivstoff und/Oder Oxidator mit negativer Löslichkeit, indem die Lösung unter Bildung des Feststoffkristallisates bis oberhalb ihrer Sättigungstemperatur erhitzt wird, **dadurch gekennzeichnet, daß** zum Initiieren der Kristallbildung oberhalb der Sättigungstemperatur Ultraschallenergie in die Lösung eingekoppelt wird.

4. Verfahren nach Anspruch 3, **dadurch gekennzeichnet, daß** die Ultraschallenergie innerhalb eines Temperaturintervalls zwischen der Sättigungstemperatur und einer um 20°C höheren Temperatur in die Lösung eingekoppelt wird.

5. Verfahren nach einem der Ansprüche 1 bis 4, **dadurch gekennzeichnet, daß** die Ultraschallenergie in die ruhende Lösung eingekoppelt wird.

6. Verfahren nach einem der Ansprüche 1 bis 4, **dadurch gekennzeichnet, daß** die Ultraschallenergie in eine Laminarströmung der Lösung eingekoppelt wird.

7. Verfahren nach einem der Ansprüche 1 bis 6, **dadurch gekennzeichnet, daß** die Ultraschallenergie mittels Sonotroden oder dergleichen direkt in die Lösung eingekoppelt wird.

8. Verfahren nach einem der Ansprüche 1 bis 7, **dadurch gekennzeichnet, daß** Ultraschallenergie mit einer Frequenz zwischen etwa 10 kHz und 50 kHz eingesetzt wird.

9. Verfahren nach einem der Ansprüche 1 bis 8, **dadurch gekennzeichnet, daß** Ultraschallenergie mit einer Leistung zwischen etwa 10 W und 100 W eingesetzt wird.

10. Verfahren nach einem der Ansprüche 1 bis 9, **dadurch gekennzeichnet, daß** die Partikelgröße des Feststoffkristallisates durch die Dauer der Einkopplung der Ultraschallenergie und/oder durch die Temperatur der Lösung bei der Einkopplung der Ultraschallenergie gesteuert wird.

11. Verfahren nach einem der Ansprüche 1 bis 10, **dadurch gekennzeichnet, daß** die Lösung mit einer im wesentlichen konstanten Kühlrate abgekühlt bzw. mit einer im wesentlichen konstanten Heizrate erhitzt wird.

12. Verfahren nach einem der Ansprüche 1 bis 10, **dadurch gekennzeichnet, daß** die Lösung während der Einkopplung der Ultraschallenergie mit einer verminderten Kühlrate abgekühlt bzw. mit einer verminderten Heizrate erhitzt wird.

13. Verfahren nach einem der Ansprüche 1 bis 10, **dadurch gekennzeichnet, daß** die Temperatur der Lösung während der Einkopplung der Ultraschallenergie im wesentlichen konstant gehalten wird.
